Europäisches Patentamt

(19) European Patent Office

Office européen des brevets

(11) Publication number: **0 126 583**
**B1**

(12) **EUROPEAN PATENT SPECIFICATION**

(45) Date of publication of patent specification: **03.02.88**

(21) Application number: **84303112.1**

(22) Date of filing: **09.05.84**

(51) Int. Cl.⁴: **B 01 J 13/02, A 01 N 25/28**

(54) Coacervation process for microencapsulation and microcapsules prepared by such coacervation process.

(30) Priority: **11.05.83 US 493706**

(43) Date of publication of application:
**28.11.84 Bulletin 84/48**

(45) Publication of the grant of the patent:
**03.02.88 Bulletin 88/05**

(84) Designated Contracting States:
**AT BE CH DE FR GB IT LI LU NL SE**

(56) References cited:
**DE-A-2 602 176**
**FR-A-1 524 827**
**US-A-3 578 605**

**CHEMICAL ABSTRACTS, vol. 89, no. 20, 13th November 1978, p. 564, no. 171855z, Columbus, Ohio, USA;**
**The Merck Index, Encyclopedia of Chemicals, Drugs and Biologicals, 1983, p. 412.**

(73) Proprietor: **BEND RESEARCH, INC.**
**64550 Research Road**
**Bend Oregon, 97701 (US)**

(72) Inventor: **Baker, Richard**
**Membrane Technology, 719 Colorado Avenue**
**Palo Alto, CA (US)**
Inventor: **Ninomiya, Yasuo**
**1-3-34 Shimeien**
**Ibaraki Osaka 567 (JP)**

(74) Representative: **Skerrett, John Norton Haigh et al**
**H.N. & W.S. SKERRETT Rutland House 148**
**Edmund Street**
**Birmingham B3 2LQ (GB)**

Courier Press, Leamington Spa, England.

## Description

Background of the Invention

Microencapsulation by both simple and complex coacervation is known. U.S. Patent No. 2,800,457 discloses the basic process of complex coacervation including the steps of (1) emulsifying an oily core ingredient in an aqueous solution of a first colloid, (2) mixing the emulsion with an aqueous solution of a second colloid having opposite electrical charge to that of the first colloid, (3) causing coacervation of the colloids around the oil droplets by dilution with water or by pH adjustment, (4) cooling the mixture to about 0°C to 10°C to cause gelation of the coacervate, and (5) hardening the gelled coacervate by pH or temperature adjustment or by treatment with aldehydes. U.S. Patent No. 3,341,466 discloses a complex coacervation process enabling production of large microcapsules with thick walls. U.S. Patent No. 3,549,555 discloses a simple coacervation process for encapsulation of oil-in-water emulsions. U.S. Patent No. 3,956,172 discloses a complex coacervation process wherein the microcapsules are hardened rapidly, without yellowing, and without an increase in the viscosity of the microencapsulation mixture.

U.S. Patent No. 3,578,605 discloses a process for making microcapsules by mixing a core material with a coacervation adjuvant comprising a long chain acid chloride having surface active properties, forming the microcapsules in a complex coacervation process, gelling and optionally hardening the microcapsules. 89 *Chemical Abstracts* 564 (1978) discloses a method for making microcapsules by first mixing a polyamide coacervation adjuvant with the core material, then emulsifying the mixture in a solution of gelatin, forming a coacervate by mixing the emulsion with a second colloid, gelling and then hardening the coacervate. French Patent No. 1,524,827 discloses a method for making microcapsules wherein the microcapsules are coated in a final step with a wax. However, none of the above processes discloses the step of rendering the microcapsules dehesive by adding a water-soluble wax derivative to the gelled coacervate.

In addition, all of the foregoing processes suffer from the drawbacks of requiring constant attention and adjustment of stirring conditions, solution viscosity, pH, and temperature, often producing microcapsules with a significant degree of agglomeration. Furthermore, those processes do not produce satisfactory microcapsules of certain core ingredients that are appreciably soluble in the capsule wall material such as the mosquito repellent, N,N-diethyl-m-toluamide (deet). Typically, microcapsules of such core ingredients are weak, and are composed of less than 50% by dry weight of the core ingredient. Finally, such microencapsulation processes have a poor yield of core ingredient, with typically only about 10% to 40% of the core ingredient being encapsulated.

What is needed, therefore, is a simple high-yield microencapsulation process capable of producing stable, relatively high-core-content microcapsules rapidly and without agglomeration.

Summary of the Invention

According to the present invention, there are provided an improved and simplified microencapsulation process, microcapsules obtained from such a process, and a long-lasting mosquito repellent composition containing such microcapsules. The process of the present invention is a complex coacervation process differing from the prior art by the use of the essential, additional step of adding a water-soluble wax derivative after gelation and prior to hardening.

The above-mentioned novel step prevents agglomeration of the capsules, which is particularly severe when the core ingredient has an appreciable solubility in the capsule wall material, and produces stable microcapsules composed of more than 60% by dry weight of the core ingredient with yields of more than 60% of the core ingredient.

Detailed Description of the Invention

The complex coacervation process of the present invention comprises the following steps:

(1) mixing a coacervation adjuvant with the core ingredient;

(2) emulsifying the mixture in an aqueous solution of an ionizable colloid;

(3) combining, while agitating, the emulsion of the first step with an aqueous solution of a second ionizable colloid of opposite electrical charge to that of the first colloid;

(4) cooling the mixture to cause gelation of the capsule walls;

(5) adding a water-soluble wax derivative to stabilize the gelled capsules and to prevent agglomeration; and

(6) hardening the capsule walls.

The coacervation adjuvant may be (1) an ionizable colloid, such as gelatin, gum arabic, casein, carrageenan, carboxymethylcellulose, and the like; (2) an ionic surfactant, preferably with a low hydrophile/lipophile balance (HLB) value, such as long-chain amines, polyamines, quaternary ammonium salts, sulfonic acid salts, carboxylic acid salts, and the like; or (3) a long-chain ionizable organic compound, such as fatty acids, fatty alcohols and fatty esters.

The core ingredient should be a generally hydrophobic liquid, which may consist of a pure liquid, a mixture of miscible liquids, one or more solids dissolved in a liquid, or an emulsion of a hydrophilic liquid or solution in a hydrophobic liquid. Examples include the mosquito repellent deet, other insect repellents, insect pheromones, insecticides, herbicides, fertilizers, pharmaceuticals, fragrances, flavors, sweeteners, cosmetics, and reactive chemicals. The process is especially useful for encapsulating core ingredients that are difficult to encapsulate by previously known techniques, such as deet, certain other amides, amines, carboxylic acids, aromatic compounds, and, in general, polar organic compounds.

The ionizable colloids should be selected from known colloidal substances such as gelatin, gum arabic, casein, carrageenan, and carboxymethylcellulose, such that one colloid is of opposite electrical charge to the other. Preferred colloids are gelatin and gum arabic.

The water-soluble wax derivative should be selected from natural or synthetic wax derivatives, such as derivatives of any of the following: lanolin, carnauba, beeswax, paraffin, polyetheresters, and chlorinated naphthalenes. A preferred example is ethoxylated lanolin.

Referring to the six-step process of the present invention described above, the first two steps may be conducted at ambient temperature or at a higher temperature, such as 35°C to 50°C. The third step should be conducted at a temperature higher than the gelling point of the colloids, typically between about 35°C and 50°C. Mixing times are not critical and may be widely varied. Improved, stronger microcapsule walls may be obtained when the emulsion from the first step is subjected to a vacuum to remove dissolved and entrained air. In the fourth step, the mixture should be cooled to about 20°C or below, preferably between 15°C and 20°C. Again, the rate of cooling is not critical and may be widely varied with no adverse consequences. The fifth step should be conducted at this cooled temperature. The sixth step may be accomplished by adding an aldehyde, such as formaldehyde, glutaraldehyde, glyoxal, or combinations of these, as described in the above-mentioned patents and in the literature, and raising the temperature gradually to between 20°C and 40°C to hasten the hardening process.

Alternatively, hardening may be accomplished by adding tannic acid at a temperature of 15°C to 25°C, followed by allowing the mixture to stand at room temperature for several hours. The tannic acid may be added before or after the water-soluble wax derivative. In the case where tannic acid is used without an aldehyde, the capsules obtained are stable only at temperatures up to about 30°C, melting at higher temperatures, which feature may be useful in the delivery of agents which are biologically or chemically active at temperatures above 30°C and not at lower temperatures.

## Example 1

14 g gelatin (Type 2503, Knox Gelatine, Inc., Cherry Hill, New Jersey) was dissolved in 175 ml water at 40°C. A solution of 4.2 g stearic acid in 100 ml deet was emulsified in the gelatin solution by stirring at 40°C. A solution of 9.3 g gum arabic (G-85, MCB Chemicals, Norwood, Ohio) in 135 ml water was added to the emulsion, which was then cooled to 18°C with continuous stirring for 3 hours. 140 ml of a 30 wt% solution of ethoxylated lanolin (Ethoxylan 100, Emery Industries, Inc., Linden, New Jersey) in water was then added, followed 10 minutes later by addition of 735 l of 50 vol% glutaraldehyde in water. The solution was stirred slowly for 1.5 hours and allowed to stand over-night at room temperature. The microcapsule precipitate was then centrifuged at 2800 rpm for 15 minutes to recover the microcapsules. Approximately 220 ml of non-agglomerated microcapsules that contained 42% to 44% by wet weight deet were obtained. By drying the microcapsules for four hours at room temperature, the deet content was determined to be 75% to 80% by dry weight. The yield of microencapsulated deet was approximately 94%. In this example, gelatin, which had a negative electrical charge, was the first ionizable colloid; stearic acid, which also had a negative electrical charge, was the coacervation adjuvant; deet was the core ingredient; gum arabic, which had a positive electrical charge, was the second ionizable colloid; and ethoxylated lanolin was the water-soluble wax derivative.

## Example 2

20 g gelatin (Type 2503) was dissolved in 200 ml water at 45°C. A dispersion of 8 g gum arabic (G-85) in 80 ml deet was added to the gelatin solution and emulsified by vigorous stirring at 45°C. A solution of 20 g gum arabic in 200 ml water was added to the emulsion with stirring. The mixture was then cooled to 25°C with continuous stirring. A solution of 8 g tannic acid in 80 ml water was then added, followed by addition of 200 ml of a 30 wt% solution of ethoxylated lanolin (Ethoxylan 100) in water. This mixture was stirred for 3 hours and then allowed to stand over-night at room temperature. The microcapsule precipitate was then centrifuged at 2700 rpm for 10 minutes to recover the microcapsules. Approximately 350 ml of non-agglomerated microcapsules that contained 16% to 20% by wet weight deet were obtained (about 60% by dry weight). The yield of microencapsulated deet was approximately 80%.

## Example 3

30 g gelatin (Type 2503) was dissolved in 440 ml water at room temperature. A solution of 5.4 g stearic acid in 157.5 ml deet was emulsified in the gelatin solution, using a blender (Model 31BL92, Dynamics Corp. of America, New Hartford, Connecticut) at room temperature. This emulsion was then evacuated for 20 minutes with continuous stirring, and was then added to a stirred solution of 20 g gum arabic (G-85) in 360 ml water at 45°C. Stirring was continued and the temperature was reduced to 19°C over a three-hour period. 540 ml of a 30 wt% solution of ethoxylated lanolin (Ethoxylan 100) in water was then added over a 20-minute period. 4.5 ml of 50 vol% glutaraldehyde and 0.3 ml of 36 vol% formaldehyde were then added, and the temperature was raised to 35°C over a one-hour period with continuous stirring. The solution was then allowed to stand over-night at room temperature. The microcapsule precipitate was then centrifuged at 3000 rpm for 30 minutes to recover the microcapsules. Approximately 390 g of non-agglomerated microcapsules that contained 30% by wet weight deet were obtained (about 70% by dry weight). The yield of microencapsulated deet was approximately 75%.

### Example 4

For comparison, Example 1 was repeated with the exception that the solution of ethoxylated lanolin was not added. Severe agglomeration occurred, resulting in gelation of the entire solution, despite rapid stirring.

### Example 5

Microcapsules obtained from Example 3 were mixed with a 47.5 wt% aqueous solution of a copolymer of methyl vinyl ether and maleic anhydride (Gantrez AN—119, GAF Corp., New York, New York), which functioned as a pharmaceutical vehicle, in a ratio of 91 parts microcapsules to 9 parts Gantrez AN—119 solution. The resulting cream was applied to human skin, and the amount of deet remaining on the skin was measured over a period of 12 hours. After the first two hours, 40% of the original amount of deet remained on the skin, after six hours 20% remained, after 10 hours 15% remained. In each case, the amount of deet remaining on the skin was the amount that could be recovered by rinsing the skin with alcohol. Laboratory testing of this formulation on rabbits against mosquitoes confirmed a long-lasting efficacy of more than eight hours.

### Claims

1. A complex coacervation process for microencapsulation of a core ingredient comprising the steps of

(a) mixing with said core ingredient a coacervation adjuvant selected from an ionizable colloid, an ionic surfactant and an ionizable long-chain organic compound,

(b) forming an emulsion by emulsifying said core ingredient in an aqueous solution of a first colloid, said emulsion containing droplets of said core ingredient,

(c) forming a coacervate by mixing said emulsion with an aqueous solution of a second colloid having opposite electrical charge to that of said first colloid,

(d) gelling said coacervate by cooling said coacervate, and

(e) hardening said gelled coacervate by at least one of the following treatments:

pH adjustment, temperature adjustment and contact with aldehydes,

characterized by the further step of adding a water-soluble wax derivative to said gelled coacervate prior to the hardening of said gelled coacervate of step (e).

2. The product of the process of claim 1 wherein the water-soluble wax derivative is selected from a derivative of lanolin, carnauba, beeswax, paraffin, polyetheresters, and chlorinated naphthalenes.

3. The process of claim 1 wherein said core ingredient is deet.

4. The product of the process of claim 1 wherein said core ingredient is deet and said water-soluble wax derivative is selected from a derivative of lanolin, carnauba, beeswax, paraffin, polyether-esters, and chlorinated naphthalenes.

5. The process of claim 1 wherein the core ingredient is a polar organic compound,

the first and second colloids are selected from gelatin, gum arabic, casein, carrageenan and carboxymethyl-cellulose,

the water-soluble wax derivative is selected from derivatives of any of lanolin, carnauba, beeswax, paraffin, polyether-esters and chlorinated naphthalenes, and

said gelled coacervate is hardened by contact with one or more aldehydes.

6. The process of claim 5 wherein the core ingredient is deet, the first and second colloids are selected from gelatin and gum arabic, and the water-soluble wax derivative is ethoxylated lanolin.

### Patentansprüche

1. Ein komplexes Koazervierungsverfahren zur Mikroverkapselung eines einzuhüllenden Materials, bestehend aus den Schritten

(a) Mischen des einzuhüllenden Materials mit einem Koazervationshilfsmittel, das ausgewählt ist aus einem ionisierbaren Kolloid, einem ionischen, grenzflächenaktiven Stoff und einer ionisierbaren, langkettigen organischen Verbindung,

(b) Bildung einer Emulsion durch Emulgieren des einzuhüllenden Materials in einer wässrigen Lösung eines ersten Kolloids, wobei die Emulsion Tröpfchen des einzuhüllenden Materials enthält,

(c) Bildung eines Koazervats durch Mischen dieser Emulsion mit einer wässrigen Lösung eines zweiten Kolloids, das eine entgegengesetzte elektrische Ladung wie das erste Kolloid hat,

(d) Gelieren dieses Koazervats durch Abkühlen des Koazervats, und

(e) Aushärten des gelierten Koazervats durch mindestens eine der folgenden Behandlungen: pH-Wert-Einstellung, Temperatureinstellung und Kontakt mit Aldehyden,

gekennzeichnet durch den weiteren Schritt des Hinzufügens eines wasserlöslichen Wachsderivats zu dem gelierten Koazervat vor dem Aushärten des gelierten Koazervats gemäß Schritt (e).

2. Das Produkt des Verfahrens gemäß Anspruch 1, wobei das wasserlösliche Wachsderivat ausgewählt ist aus einem Derivat von Lanolin, Karnaubawachs, Bienenwachs, Paraffin, Polyetherestern und chlorierten Naphthalenen.

3. Das Verfahren gemäß Anspruch 1, wobei das einzuhüllende Material DEET ist.

4. Das Produkt des Verfahrens gemäß Anspruch 1, wobei das einzuhüllende Material DEET ist und das wasserlösliche Wachsderivat ausgewählt ist aus einem Derivat von Lanolin, Karnaubawachs, Bienenwachs, Paraffin, Polyetherestern und chlorierten Naphthalenen.

5. Das Verfahren gemäß Anspruch 1, bei dem das einzuhüllende Material eine polare organische Verbindung ist,

die ersten und zweiten Kolloide ausgewählt sind aus Gelatine, Gummi-arabikum, Casein, Carrageen und Carboxylmethyl-Cellulose,

das wasserlösliche Wachsderivat ausgewählt ist aus Derivaten von einem der Stoffe wie Lanolin, Karnaubawachs, Bienenwachs, Paraffin, Polyetherestern und chlorierten Naphthalenen, und

wobei das gelierte Koazervat durch Kontakt mit einem oder mehreren Aldehyden gehärtet wird.

6. Das Verfahren nach Anspruch 5, wobei das einzuhüllende Material DEET ist, während die ersten und zweiten Kolloide ausgewählt sind aus Gelatine und Gummi-arabikum und das wasserlösliche Wachsderivat ethoxyliertes Lanolin ist.

**Revendications**

1. Procédé de coacervation complexe pour microencapsulation d'un ingrédient de noyau, comportant les étapes de:

a) mélange avec ledit ingrédient de noyau d'un adjuvant de coacervation choisi parmi un colloïde ionisable, un agent tensio-actif ionique et un composé organique ionisable à chaîne longue,

b) formation d'une émulsion en émulsionnant ledit ingrédient de noyau dans une solution aqueuse d'un premier colloïde, ladite émulsion contenant des gouttelettes dudit ingrédient de noyau,

c) formation d'un coacervat en mélangeant ladite émulsion avec une solution aqueuse d'un second colloïde ayant une charge électrique opposée à celle dudit premier colloïde,

d) gélification dudit coacervat en refroidissant ledit coacervat, et

e) durcissement dudit coacervat gélifié par au moins l'un des traitements suivants: réglage du pH, réglage de la température et mise en contact avec des aldéhydes,

caractérisé par l'étape supplémentaire d'addition d'un dérivé de cire soluble dans l'eau audit coacervat gélifié, avant le durcissement dudit coacervat gélifié à l'étape e).

2. Produit du procédé selon la revendication 1, dans lequel le dérivé de cire soluble dans l'eau est choisi parmi un dérivé de lanoline, de caranda, de cire d'abeilles, de paraffine, d'esters de polyéther et de naphtalènes chlorés.

3. Procédé selon la revendication 1, dans lequel l'ingrédient de noyau est le N,N-diéthyle-m-toluamide.

4. Produit du procédé selon la revendication 1, dans lequel ledit ingrédient de noyau est le N,N-diéthyle-m-toluamide et ledit dérivé de cire soluble dans l'eau est choisi parmi un dérivé de lanoline, de caranda, de cire d'abeilles, de paraffine, d'esters de polyéther et de naphtalènes chlorés.

5. Procédé selon la revendication 1, dans lequel ledit ingrédient de noyau est un composé organique polaire, le premier et le second colloïde sont choisis parmi la gélatine, la gomme arabique, la caséine, le carrageenin et la cellulose carboxy-méthylique, le dérivé de cire soluble dans l'eau est choisi parmi les dérivés d'un produit quelconque parmi la lanoline, le caranda, la cire d'abeilles, la paraffine, les esters de polyéther et les naphtalènes chlorés, et ledit coacervat gélifié est durci par mise en contact avec un ou plusieurs aldéhydes.

6. Procédé selon la revendication 5, dans lequel l'ingrédient de noyau est le N, N-diéthyle-m-toluamide, le premier et le second colloïde sont choisis parmi la gélatine et la gomme arabique, et le dérivé de cire soluble dans l'eau est de la lanoline éthoxylée.